# EUROPÄISCHE PATENTSCHRIFT

(11) **EP 2 549 412 B1**
(45) Veröffentlichungstag und Bekanntmachung des Hinweises auf die Patenterteilung: **19.03.2014**
(21) Anmeldenummer: 11174471.0
(22) Anmeldetag: 19.07.2011
(51) Int. Cl.: G06Q 10/00, B64D 9/00, B65D 88/14

(54) **Betriebsmodusänderung eines einer Transporteinheit zugeordneten elektronischen Geräts**
Changing the operating mode of an electronic device assigned to a transport unit
Modification du mode de fonctionnement d'un appareil électronique associé à une unité de transport

(43) Veröffentlichungstag der Anmeldung: 23.01.2013
(73) Patentinhaber: Deutsche Post AG, 53113 Bonn (DE)
(72) Erfinder: Josefiak, Frank, 53177 Bonn Bad Godesberg (DE)
(74) Vertreter: Cohausz & Florack

(56) Entgegenhaltungen:
- EP-A1- 0 541 928
- EP-A2- 1 069 540
- WO-A1-00/08287
- WO-A1-2004/064003
- WO-A2-2004/078601
- GB-A- 2 043 584
- US-A1- 2008 111 679
- US-A1- 2008 271 651
- US-B1- 6 281 797
- US-B1- 7 791 455

## Beschreibung

### Gebiet der Erfindung

Die vorliegende Erfindung betrifft eine Vorrichtung, ein Verfahren und ein Computerprogramm zur Änderung eines Betriebsmodus eines elektronischen Geräts, das einer von einem Fahrzeug zu transportierenden Transporteinheit zugeordnet ist, insbesondere eines elektronischen Geräts mit einer Funk-Komponente, das einer von einem Flugzeug zu transportierenden Transporteinheit zugeordnet ist.

### Hintergrund der Erfindung

In jüngster Zeit hat die Echtzeit-Überwachung von Transportgütern zunehmend an Bedeutung gewonnen. Dazu werden die Transportgüter selbst oder Transporteinheiten, mit denen ein oder mehrere Transportgüter transportiert werden, mit elektronischen Geräten ausgestattet, die die Transportgüter betreffende Kenngrößen erfassen und drahtlos (beispielsweise über zellulare Mobilfunksysteme) an eine Zentrale übermitteln können, von wo sie beispielsweise von dem für den Transport verantwortlichen Logistikunternehmen oder dem Kunden abgerufen werden können. Zu den Kenngrößen zählen die aktuelle Position des Transportguts (Tracking), die aktuelle Temperatur, Informationen zu Erschütterungen, die aktuelle Luftfeuchte oder der aktuelle Lichteinfall, um nur einige Beispiele zu nennen. Diese Kenngrößen können auch über Zeitintervalle gesammelt und dann als Profil zur Verfügung gestellt werden (entweder durch die elektronischen Geräte selbst oder durch die Zentrale).

Diese Echtzeit-Überwachung bietet eine Reihe von Vorteilen:
- Erkennung und Vermeidung von Abweichungen der Kenngrößen vom gewünschten Sollzustand: Beispielsweise kann eine Verladung einer Transporteinheit in ein falsches Fahrzeug oder ein zu langes Verweilen einer Transporteinheit an einem Ort mit zu starker Sonneneinstrahlung erkannt werden.
- Erhöhung der Sicherheit: Beispielsweise kann ein unautorisierter Zugriff auf die Transportgüter in Echtzeit erkannt und eine automatische Alarmierung des Kunden und/oder Logistikunternehmens, beispielsweise per SMS oder Email, angestoßen werden.
- Erfüllung von Nachweispflichten rechtlicher Natur: Beispielsweise kann bei temperaturgeführten Transporten, bei denen der Kunde oder das Logistikunternehmen nachweisen muss, dass bestimmte Temperaturgrenzen während des Transports eingehalten wurden, der Nachweis in Echtzeit erbracht werden.
- Prozessverbesserung für das Logistikunternehmen: Das Logistikunternehmen kann in Echtzeit seine Transportprozesse sowie einzelne Bestandteile davon messen und benchmarken. Dies ist bisher, wenn überhaupt, nur mit erheblichem Aufwand und hohen Kosten möglich.
- Haftungserleichterung
- Reduktion der Versicherungssummen
- Erweiterung des Transportportfolios

Gegenwärtig gibt es allerdings keine Möglichkeit, Luftfrachttransporte in Echtzeit zu überwachen. Dies liegt darin begründet, dass ein notwendiger Bestandteil der Echtzeitüberwachung die funkbasierte Übertragung von Kenngrößen der Transportgüter durch die elektronischen Geräte ist, mit denen die Transportgüter oder Transporteinheiten ausgestattet werden. Funkbasierte Anwendungen, die in Flugzeugen genutzt werden sollen, unterliegen allerdings der Zertifizierung durch die zuständige Luftfahrtbehörde, also beispielsweise der European Aviation Safety Agency (EASA) und der Federal Aviation Administration (FAA). Gegenwärtig untersagen es beide Behörden, dass aktiv sendende Einheiten, die nicht unter der Kontrolle des jeweiligen Flugbetreibers stehen, im Flugzeug befördert werden.

Grundlage für eine Zulassung derartiger Einheiten für die Beförderung in Flugzeugen könnte allerdings eine erzwungene Abschaltung dieser Einheiten oder zumindest eine erzwungene Deaktivierung der Funkmodule dieser Einheiten während des gesamten Fluges sein, damit eine Störung des flugzeuginternen Funk- und Steuersystems ausgeschlossen wird.

So sind beispielsweise aus der WO 2004/078601 A2, Luftfrachtbehälter mit einem aktiven Funksender bekannt, der an Bord eines Flugzeuges durch geeignete Mittel abgeschaltet wird. Dabei werden kontaktlose Mittel zum Abschalten des aktiven Funksenders beschrieben. Es wird vorgeschlagen, dass der aktive Funksender in einem Fuß des Luftfrachtbehälters angeordnet ist und beispielsweise durch das Magnetfeld eines Permanentmagneten ausgeschaltet werden soll. Der Permanentmagnet befindet sich in einer Ausnehmung einer Luftfrachtpalette, die zur Aufnahme des Fußes und zur Sicherung des Luftfrachtbehälters an Bord des Flugzeugs dient.

Aus der US 2008/0271651 A1 ist ein Container bekannt, welcher in eine Halterung geschoben werden kann, und offenbart eine drahtgebundene Kommunikation zwischen einem in dem Container befindlichen elektronischen Gerät (z.B. einem Mikroprozessor bzw. einer Steuereinheit) und einer externen Einheit. Beispielsweise wird eine elektrische Verbindung zwischen einer Basis und einer internen Steuereinheit eines Container über Kontakte hergestellt, wenn der Container in der Basis aufgenommen ist.

Auch aus der WO 00/08287 A2 sind in einem Fahrzeug anordenbare Aufnahmen für Container zum geprüften Transport von Gegenständen bekannt, wobei eine elektrische Verbindung beim Einschieben des Containers in die Aufnahme hergestellt werden soll.

Aus der EP 1 069 540 A2 ist weiterhin ein System bekannt, um die Gefahr eines Diebstahls von Geldkassetten zu minimieren. Dazu kann ein Sensor der Geldkassette einen Entfernungssensor aufweisen, welcher Funksignale aussenden soll. Der Sensor der Geldkassette weist zudem einen Ladesensor auf. Wenn sich die Geldkassette in einem Transportfahrzeug oder Geldautomaten befindet, wird durch einen Kontakt zwischen dem Ladesensor und einem entsprechenden Sensor im Fahrzeug oder im Geldautomaten ein Schalter betätigt, sodass der Entfernungssensor ausgeschaltet wird.

Aus der US 2008/0111679 A1 ist ein System zur Verfolgung von Geldkassetten zwischen Transportwagen und Geldautomat bekannt. Durch die empfangene Leistung oder die Zeitverzögerung eines Senders kann der Pfad der Geldkassette bestimmt werden. Dabei kann beispielsweise überprüft werden, ob die Geldkassette sich in einem vorgegebenen sicheren Korridor befindet.

**Allgemeine Beschreibung einiger beispielhafter Ausführungsformen der Erfindung** Die vorliegende Erfindung hat sich unter anderem die Aufgabe gestellt, die oben genannten Nachteile zu überwinden.

Die vorliegende Erfindung beschreitet dazu einen robusten Weg, der als "Fail Safe" eingestuft werden könnte und zudem konstruktiv einfach ausgebildet ist.

Offenbart werden diesbezüglich Vorrichtungen gemäß dem Anspruch 1, ein Verfahren gemäß Anspruch 14 und ein Computerprogramm gemäß Anspruch 15. Vorteilhafte Ausführungsformen sind den abhängigen Ansprüchen zu entnehmen.

Eine beispielhafte erfindungsgemäße Vorrichtung umfasst Erfassungsmittel zum Erfassen, ob eine von einem Fahrzeug zu transportierende Transporteinheit durch zumindest ein Sicherungsmittel gegen eine Bewegung in zumindest eine Richtung relativ zum Fahrzeug gesichert ist.

Bei dem Fahrzeug handelt es sich um ein Land-, Wasser- oder Luftfahrzeug, also beispielsweise einen Lastkraftwagen, einen Zug, ein Schiff oder ein Flugzeug.

Die Transporteinheit ist beispielsweise zum Transport in, an, auf oder unter dem Fahrzeug eingerichtet. Die Transporteinheit kann beispielsweise ein oder mehrere Transportgüter (beispielsweise Pakete) aufnehmen. Die Transporteinheit kann beispielsweise als Ladeeinheit (Unit Load Device, ULD) ausgebildet sein, also beispielsweise als Container oder Palette.

Die Sicherungsmittel können Bestandteil des Fahrzeugs sein. Sie können beispielsweise fest oder lösbar mit dem Fahrzeug verbunden sein. Beispiele für Sicherungsmittel sind Sperrklinken oder Krallen (beispielsweise für ULDs), die eine Bewegung der Transporteinheit in zumindest eine Richtung relativ zum Fahrzeug verhindern. Diese Sicherungsmittel werden beispielsweise dann aktiviert (automatisch oder manuell, beispielsweise durch Hochklappen aus einer Bodenebene des Fahrzeugs oder durch Heranführen an die Transporteinheit), wenn eine Transporteinheit im Fahrzeug ihre Transportposition erreicht hat.

Eine Transporteinheit mit rechteckförmigem Umfang kann beispielsweise durch zumindest vier Sicherungsmittel (ein Sicherungsmittel auf jeder Seite) an einer Bewegung in der Horizontalen gehindert werden. Durch spezielle Ausbildung der Sicherungsmittel, beispielsweise derart, dass die Sicherungsmittel zumindest einen Teil (beispielsweise eine Bodenplatte) der Transporteinheit zumindest teilweise übergreifen, kann zusätzlich eine Bewegung der Transporteinheit in der Vertikalen verhindert werden.

Die Erfassungsmittel sind eingerichtet zu erfassen, ob die Transporteinheit durch zumindest ein Sicherungsmittel gegen eine Bewegung in zumindest eine Richtung relativ zum Fahrzeug gesichert ist. Die Erfassungsmittel können beispielsweise Sensormittel und Auswertungsmittel umfassen. Die Sensormittel können beispielweise eingerichtet sein, auf eine erfolgte Sicherung mit einer Änderung einer physikalischen Eigenschaft der Sensormittel oder mit der Ausgabe eines Signals (beispielsweise eines Spannungsimpulses) zu reagieren (beispielsweise eines elektrischen Widerstands). Die Auswertungsmittel können beispielsweise mit den Sensormittel drahtgebunden oder drahtlos verbunden sein und können eingerichtet sein, die Änderung der physikalischen Eigenschaft oder das ausgegebene Signal auszuwerten, beispielsweise um festzustellen, ob eine Sicherung erfolgt ist. Dies kann beispielsweise der Fall sein, wenn die Änderung der physikalischen Eigenschaft oder das ausgegebene Signal einen vordefinierten Schwellwert überschreitet.

Das Erfassen kann beispielsweise auf einem Kontakt zwischen dem Sicherungsmittel und zumindest einem Teil der Transporteinheit beruhen, der sich einstellt, wenn die Transporteinheit mit dem Sicherungsmittel gesichert ist. Alternativ kann das Erfassen beispielsweise auf einer Kraft beruhen, die von dem Sicherungsmittel auf zumindest einen Teil des zwischen dem Sicherungsmittel und zumindest. einem Teil der Transporteinheit angeordneten Erfassungsmittels (beispielsweise auf zumindest einen Teil der Sensormittel) ausgeübt wird, wenn die Transporteinheit mit dem Sicherungsmittel gesichert ist.

Dabei kann beispielsweise nur erfasst werden, ob die Transporteinheit überhaupt durch mindestens ein Sicherungsmittel gesichert ist. Alternativ kann beispielsweise auch erfasst werden, durch wie viele Sicherungsmittel die Transporteinheit gesichert ist. Bezüglich jedes Sicherungsmittels kann beispielsweise nur erfasst werden, dass durch dieses Sicherungsmittel eine Sicherung der Transporteinheit gegen eine Bewegung in mindestens eine Richtung relativ zum Fahrzeug stattfindet. Alternativ kann auch erfasst werden, bezüglich wie vieler und/oder welcher Richtungen ein oder mehrere Sicherungsmittel eine Sicherung der Transporteinheit gewährleisten.

Die beispielhafte erfindungsgemäße Vorrichtung umfasst weiterhin Mittel zum Ändern eines Betriebsmodus eines der Transporteinheit zugeordneten elektronischen Geräts in Abhängigkeit von einem Ergebnis des Erfassens oder zur Ausgabe eines Signals (beispielsweise an das elektronische Gerät, beispielsweise über eine Schnittstelle des elektronischen Geräts) zur Änderung des Betriebsmodus in Abhängigkeit von dem Ergebnis des Erfassens. Diese Mittel können beispielsweise durch einen Prozessor oder eine Schaltung gebildet werden. Der Prozessor bzw. die Schaltung kann gleichzeitig auch die Auswertungsmittel implementieren oder alternativ von einem Prozessor bzw. einer Schaltung, die die Auswertungsmittel implementiert, verschieden sein.

Das elektronische Gerät kann beispielsweise zur Erfassung und/oder Übermittelung ( zur drahtlosen Übermittlung, beispielsweise über ein drahtloses Kommunikationssystem wie beispielsweise ein Mobilfunksystem) von einer oder mehreren Kenngrößen betreffend die Transporteinheit oder betreffend eine oder mehrere in der Transporteinheit enthaltene Transportgüter eingerichtet sein (beispielsweise aktuelle Position, aktuelle Temperatur, aktuelle Luftfeuchtigkeit, aktueller Lichteinfall, Informationen zu Erschütterungen, etc.). Dies kann beispielsweise in Echtzeit erfolgen. Das elektronische Gerät ist beispielsweise dadurch der Transporteinheit zugeordnet, dass es zumindest vorübergehend (beispielsweise zumindest für die Dauer des Transports der Transporteinheit mit dem Fahrzeug) von der Transporteinheit aufgenommen oder in, an oder auf der Transporteinheit (beispielsweise lösbar) befestigt ist.

Die Mittel zur Änderung des Betriebsmodus bzw. zur Ausgabe des Signals stehen beispielsweise mit dem Erfassungsmittel in Verbindung und reagieren auf das Ergebnis des Erfassens, ob die Transporteinheit durch das zumindest eine Sicherungsmittel gesichert ist, mit einer Änderung des Betriebsmodus bzw. der Ausgabe des Signals zur Auslösung der Änderung des Betriebsmodus. Das Ergebnis des Erfassens kann beispielsweise lauten, dass die Transporteinheit (beispielsweise aktuell) durch zumindest ein Sicherungsmittel gesichert ist oder dass die Transporteinheit nicht durch zumindest ein Sicherungsmittel gesichert ist. Beispielsweise kann, wenn erfasst wurde, dass eine Sicherung durch zumindest ein Sicherungsmittel erfolgt ist, eine Änderung des Betriebsmodus vorgenommen (oder ein diesbezügliches Signal ausgegeben werden). Eine erneute Änderung des Betriebsmodus kann dann beispielsweise stattfinden, sobald erfasst wird, dass eine Sicherung durch zumindest ein Sicherungsmittel nicht mehr vorliegt. Es gibt dann also beispielsweise nur zwei Betriebsmodi des elektronischen Geräts: einen ersten Betriebsmodus (beispielsweise mit Funkaktivität), der aktiv ist, solange keine Sicherung der Transporteinheit erfasst wird, und einen zweiten Betriebsmodus (beispielsweise ohne Funkaktivität), der aktiv ist, solange die Sicherung der Transporteinheit durch zumindest ein Sicherungsmittel erfasst wird. Dadurch wird die Aufnahme des ursprünglichen Betriebsmodus nach erfolgtem Transport mit dem Fahrzeug (beispielsweise nach dem Ende des Flugs) erzielt. Der zweite Betriebsmodus kann beispielsweise auch dann aktiv sein, wenn erkannt wird (beispielsweise durch die Vorrichtung oder eine ihrer Komponenten), dass zumindest ein Teil der Vorrichtung (beispielsweise das Erfassungsmittel oder ein Teil davon), defekt ist.

Alternativ kann auch bei Erfassung, dass eine Sicherung durch zumindest ein Sicherungsmittel nicht mehr vorliegt, keine erneute Änderung des Betriebsmodus stattfinden. Eine erneute Änderung des Betriebsmodus kann dann beispielsweise nur manuell am elektronischen Gerät vorgenommen werden und/oder von weiteren Bedingungen abhängen.

Das Signal zur Änderung des Betriebsmodus kann beispielsweise ein Steuersignal sein, das die Änderung des Betriebsmodus unmittelbar bewirkt, oder kann ein Informationssignal sein, das anzeigt, dass eine Änderung des Betriebsmodus vorgenommen werden soll.

Die Änderung des Betriebsmodus kann beispielsweise das Abschalten des elektronischen Geräts oder eine Deaktivierung der Funk-Komponente des elektronischen Geräts beinhalten.

Die Vorrichtung nutzt also die Tatsache aus, dass die Transporteinheit vor dem Beginn des Transports durch Sicherungsmittel gesichert werden muss (in der Regel zumindest gegen Bewegungen relativ zum Fahrzeug in der Horizontalen). Da der Transport (beispielsweise der Flug) nicht beginnen kann, bevor diese Sicherung erfolgt ist, ist die Erfassung, ob (zumindest bezüglich einer Richtung) eine Sicherung vorliegt, ein geeignetes Kriterium zur Änderung des Betriebsmodus des mit der Transporteinheit verbundenen elektronischen Geräts, wenn während des Transports ein bestimmter Betriebsmodus (beispielsweise ein Standby-Modus oder ein Modus mit deaktiviertem Funk) des Geräts erwünscht oder zwingend erforderlich ist. Da in einem Flugzeug die Sicherung der Ladung vor der Inbetriebnahme des Flugzeugs erfolgen muss, werden die Betriebsmodusänderung (beispielsweise die Deaktivierung des Furikmoduls) des elektronischen Geräts und auch der diesbezügliche Zeitpunkt hier also vorteilhaft mit luftfahrtrechtlichen Regularien verknüpft.

Das Erfassen, ob eine Sicherung vorliegt, kann in einfacher, robuster und ausfallsicherer Weise erfolgen, wie anhand von Ausführungsbeispielen nachfolgend noch genauer erläutert wird.

Gemäß einer Ausführungsform der erfindungsgemäßen Vorrichtung ist das Erfassungsmittel als Detektor ausgebildet, der eingerichtet ist zum Erfassen, ob eine von einem Fahrzeug zu transportierende Transporteinheit durch zumindest ein als Sicherung ausgebildetes Sicherungsmittel gegen eine Bewegung in zumindest eine Richtung relativ zum Fahrzeug gesichert ist, und das Mittel zur Änderung des Betriebsmodus oder zur Ausgabe des Signals zur Änderung des Betriebsmodus ist ausgebildet als Steuerung, die eingerichtet ist zur Änderung eines Betriebsmodus eines der Transporteinheit zugeordneten elektronischen Geräts in Abhängigkeit von einem Ergebnis des Erfassens, oder zur Ausgabe eines Signals zur Änderung des Betriebsmodus in Abhängigkeit von dem Ergebnis des Erfassens. Der Detektor kann als Sensormittel einen Sensor und als Auswertungsmittel eine Auswertungseinheit umfassen.

Gemäß einer Ausführungsform der erfindungsgemäßen Vorrichtung ist das Erfassungsmittel eingerichtet, die Sicherung der Transporteinheit durch das Sicherungsmittel basierend auf einem Kontakt zu erfassen, der sich zwischen dem Sicherungsmittel und zumindest einem Teil des Erfassungsmittels ausbildet, wenn die Transporteinheit durch das Sicherungsmittel gesichert ist. Über den Kontakt kann das Erfassungsmittel beispielsweise eine Eigenschaft (z.B. das Material des Sicherungsmittels, od. eine aufgebrachte Kennung, od. das elektrische Potential des Sicherungsmittels und ggfs. des mit dem Sicherungsmittel verbundenen Fahrzeugs) des Sicherungsmittels erfassen und dadurch darauf schließen, dass eine Sicherung erfolgt ist oder vorliegt.

Gemäß der erfindungsgemäßen Vorrichtung ist zumindest ein Teil des Erfassungsmittels eingerichtet, zwischen dem Sicherungsmittel und zumindest einem Teil der Transporteinheit, über den das Sicherungsmittel die Transporteinheit gegen die Bewegung in die zumindest eine Richtung relativ zum Fahrzeug sichert, angeordnet zu werden. Bei dem Teil des Erfassungsmittels kann es sich beispielsweise um zumindest einen Teil des Sensormittels handeln.

Gemäß einer Ausführungsform der erfindungsgemäßen Vorrichtung handelt es sich bei dem Teil der Transporteinheit um einen Teil einer Bodenplatte oder um einen Teil eines in Bodennähe ausgebildeten Profils der Transporteinheit.

Gemäß einer Ausführungsform der erfindungsgemäßen Vorrichtung übergreift das Sicherungsmittel den Teil der Transporteinheit zumindest teilweise (beispielsweise formschlüssig), wenn die Transporteinheit durch das Sicherungsmittel gesichert ist. Durch das zumindest teilweise Übergreifen kann beispielsweise eine Bewegung der Transporteinheit in vertikaler Richtung unterbunden werden. Der Teil des Erfassungsmittels, der zwischen dem Sicherungsmittel und dem Teil der Transporteinheit, über den das Sicherungsmittel die Transporteinheit gegen die Bewegung in die zumindest eine Richtung relativ zum Fahrzeug sichert, angeordnet ist, kann dann beispielsweise zumindest dort angeordnet sein, wo das Sicherungsmittel den Teil der Transporteinheit übergreift. Der Teil des Erfassungsmittels kann dann beispielsweise auf dem Teil der Transporteinheit angeordnet (beispielsweise darauf mit oder ohne Fixierung ausgebracht) sein. Wenn der Teil der Transporteinheit eine Bodenplatte oder ein in Bodennähe ausgebildetes Profil der Transporteinheit ist, kann der Teil der Erfassungseinheit beispielsweise auf der Bodenplatte bzw. dem Profil in einem Randbereich angeordnet sein, der bei erfolgter Sicherung durch die Sicherungsmittel übergriffen wird. Durch das Übergreifen kann beispielsweise ein Kontakt zwischen Sicherungsmittel und dem Teil des Erfassungsmittels stattfinden oder durch das Sicherungsmittel eine Kraft auf den Teil des Erfassungsmittels ausgeübt werden, auf dessen/deren Grundlage erfasst wird, dass eine Sicherung erfolgt ist.

Gemäß einer Ausführungsform der erfindungsgemäßen Vorrichtung ist das Erfassungsmittel eingerichtet, die Sicherung der Transporteinheit durch das Sicherungsmittel basierend auf einer Kraft zu erfassen, die von dem Sicherungsmittel auf den zwischen dem Sicherungsmittel und dem Teil der Transporteinheit angeordneten Teil des Erfassungsmittels ausgeübt wird, wenn die Transporteinheit durch das Sicherungsmittel gesichert ist. Die Kraft kann beispielsweise eine Verformung des Teils des Erfassungsmittels (beispielsweise eines Sensormittels) bewirken. Die Kraft bewirkt beispielsweise eine Änderung eines elektrischen Widerstands, einer elektrischen Kapazität, einer elektrischen Induktivität, einer elektrischen Spannung, eines Magnetfelds oder eines Drucks. Basierend auf dieser Änderung wird von dem Erfassungsmittel beispielsweise die Sicherung der Transporteinheit durch das Sicherungsmittel erfasst.

Gemäß der erfindungsgemäßen Vorrichtung ist zumindest der Teil des Erfassungsmittels, der zwischen dem Sicherungsmittel und zumindest dem Teil der Transporteinheit angeordnet werden kann, flexibel ausgebildet, beispielsweise als Band, Kabel oder Leitung. Es kann sich bei diesem flexiblen Teil des Erfassungsmittels um ein Sensormittel oder einen Teil davon handeln. Der flexible Teil kann (beispielsweise als Band) mit ein oder mehreren Sensoren (beispielsweise kapazitiver od. piezoelektrischer Art) ausgestattet sein oder selbst als Sensor wirken (beispielsweise als berührungsempfindlicher Streifen oder Dehnmessstreifen). Der flexible Teil kann beispielsweise eine elektrische Leitung sein, oder eine mit einem gasförmigen oder flüssigen Medium gefüllte Leitung (z.B. ein Schlauch) sein, beispielsweise zur Messung von Druckschwankungen oder Durchflussänderungen. Der Teil des Erfassungsmittels kann so flexibel sein, dass er um die Transporteinheit herum geführt und/oder auf zumindest einem Teil (beispielsweise einem Randbereich einer Bodenplatte oder eines bodennahen Profils) der Transporteinheit ausgebracht werden kann.

Ein Ende des Teils des Erfassungsmittels kann beispielsweise fest mit der Vorrichtung verbunden sein, und das andere Ende des Teils des Erfassungsmittels kann beispielsweise lösbar mit der Vorrichtung, verbindbar sein. Wenn der Teil des Erfassungsmittels beispielsweise als elektrische Leitung ausgebildet ist, kann das eine Ende beispielsweise fest elektrisch mit einem weiteren Teil des Erfassungsmittels (beispielsweise einem Auswertungsmittel der Vorrichtung) verbunden sein, während der andere Teil beispielsweise über eine elektrische Steckverbindung mit dem weiteren Teil des Erfassungsmittels verbunden sein kann. Dies hat den Vorteil, dass das lose Ende - beispielsweise beim Ausbringen des Teils des Erfassungsmittels auf dem Randbereich einer Bodenplatte oder eines bodennahen Profils der Transporteinheit - um die Transporteinheit herum geführt und dann mit der Vorrichtung verbunden werden kann.

Der Teil des Erfassungsmittels kann zumindest teilweise in der Vorrichtung aufnehmbar oder aufrollbar sein.

Gemäß einer Ausführungsform der erfindungsgemäßen Vorrichtung umfasst die Änderung des Betriebsmodus des elektronischen Geräts zumindest eine der folgenden Änderungen:
- Aus- und/oder Anschalten des elektronischen Geräts;
- Unterbrechung und/oder Wiederherstellung einer Stromversorgung des elektronischen Geräts;
- Übergang in einen und/oder Verlassen eines Standby-Modus des elektronischen Geräts;
- Deaktivierung und/oder Aktivierung zumindest einer Funkkomponente des elektronischen Geräts;
- Übergang in einen und/oder Verlassen eines Modus, in dem das elektronische Gerät keine Informationen sendet oder senden kann.

Gemäß einer Ausführungsform der erfindungsgemäßen Vorrichtung umfasst die Vorrichtung Mittel zum Erkennen, ob die Vorrichtung oder zumindest ein Teil davon (beispielsweise die Erfassungsmittel oder ein Teil davon, beispielsweise die Sensormittel oder die Auswertungsmittel) defekt sind, wobei das Mittel zur Änderung des Betriebsmodus des elektronischen Geräts oder zur Ausgabe des Signals weiter eingerichtet ist, den Betriebsmodus in Abhängigkeit eines Ergebnisses des Erkennens zu ändern oder ein Signal zur Änderung des Betriebmodus in Abhängigkeit des Ergebnisses des Erkennens auszugeben. Beispielsweise kann bei Erkennung, dass zumindest ein Teil der Vorrichtung defekt ist, ein Betriebsmodus ohne Funkaktivität erzwungen oder ein Signal zum Übergang in diesen Betriebsmodus ausgegeben werden. Dadurch wird sichergestellt, dass die Vorrichtung selbst im zumindest teilweise defekten Zustand einen für den Transport geeigneten Betriebsmodus (im Flugzeug beispielsweise einen Betriebmodus ohne Funkaktivität) einnimmt.

Gemäß einer Ausführungsform der erfindungsgemäßen Vorrichtung ist die Vorrichtung ein Teil des elektronischen Geräts oder ist lösbar mit dem elektronischen Gerät verbindbar, beispielsweise über eine elektrische Schnittstelle. Die Vorrichtung kann beispielsweise integraler Bestandteil des elektronischen Geräts sein, mit dem ein oder mehrere Kenngrößen der Transporteinheit oder von ein oder mehreren darin enthaltenen Transportgütern ermittelbar und drahtlos übertragbar sind. Alternativ kann die Vorrichtung ein eigenständiges Gerät sein, das über eine (elektrische) Schnittstelle mit dem elektronischen Gerät verbindbar ist, um die Beeinflussung des Betriebsmodus des elektronischen Geräts zu erlauben. Erfindungsgemäß ist die Vorrichtung ein (beispielsweise integraler oder nachgerüsteter) Teil der Transporteinheit (beispielsweise eines ULD) oder lösbar mit der Transporteinheit verbindbar.

Eine weitere beispielhafte erfindungsgemäße Vorrichtung umfasst Mittel zum Empfangen (beispielsweise einen Empfänger) des von der bereits beschriebenen beispielhaften erfindungsgemäßen Vorrichtung (oder einer ihrer Ausfübrungsformen) ausgegebenen Signals und Mittel (beispielsweise einen Prozessor) zum Ändern des Betriebsmodus des elektronischen Geräts basierend auf dem empfangenen Signal. Bei der weiteren Vorrichtung kann es sich beispielsweise um das elektronische Gerät oder einen Teil davon handeln. Das ausgegebene Signal kann beispielsweise über eine drahtlose oder drahtgebundene Schnittstelle empfangen werden.

Ein beispielhaftes erfindungsgemäßes Verfahren umfasst die folgenden Schritte:
- Erfassen, ob eine von einem Fahrzeug zu transportierende Transporteinheit durch zumindest ein Sicherungsmittel gegen eine Bewegung in zumindest eine Richtung relativ zum Fahrzeug gesichert ist, mit einem Erfassungsmittel und
- Ändern (201; 402; 404) eines Betriebsmodus eines der Transporteinheit (4) zugeordneten elektronischen Geräts in Abhängigkeit von einem Ergebnis des Erfassens oder Ausgeben (302; 402; 404) eines Signals zur Änderung des Betriebsmodus des elektronischen Geräts in Abhängigkeit von einem Ergebnis des Erfassens mit einem Mittel (10; 30) zum Ändern des Betriebsmodus, wobei die Änderung des Betriebsmodus des elektronischen Geräts eine Deaktivierung und/oder Aktivierung zumindest einer Funkkomponente des elektronischen Geräts umfasst;
   wobei zumindest ein Teil (20) des Erfassungsmittels (2) eingerichtet ist, zwischen dem Sicherungsmittel (5; 7) und zumindest einem Teil (41) der Transporteinheit (4), über den das Sicherungsmittel (5; 7) die Transporteinheit (4) gegen die Bewegung in die zumindest eine Richtung relativ zum Fahrzeug sichert, angeordnet zu werden, dass zumindest der Teil (20; 8) des Erfassungsmittels (2), der zwischen dem Sicherungsmittel (5; 7) und zumindest dem Teil (41) der Transporteinheit (4) angeordnet werden kann, so flexibel ausgebildet ist, dass der Teil (20; 8) des Erfassungsmittels (2) um die Transporteinheit (4) herumgeführt werden kann.

Das Verfahren wird beispielsweise durch die beschriebene beispielhafte erfindungsgemäße Vorrichtung durchgeführt.

Ein beispielhaftes erfindungsgemäßes Computerprogramm umfasst Programmanweisungen, die einen Prozessor zur Ausführung und/oder Steuerung der Schritte des beschriebenen beispielhaften erfindungsgemäßen Verfahrens veranlassen, wenn das Computerprogramm auf dem Prozessor läuft. Der Prozessor kann beispielsweise ein Teil der beschriebenen beispielhaften erfindungsgemäßen Vorrichtung sein.

Das beispielhafte erfindungsgemäße Computerprogramm kann beispielsweise auf einer Datenträgervorrichtung gespeichert sein. Die Datenträgervorrichtung kann beispielsweise ein computerlesbares Speichermedium sein, welches das Computerprogramm enthält und z.B. als magnetisches, elektrisches, elektro-magnetisches, optisches und/oder andersartiges Speichermedium ausgebildet ist.

Die Merkmale der beschriebenen beispielhaften erfindungsgemäßen Vorrichtung und ihrer Ausführungsformen sollen auch in allen möglichen Kombinationen miteinander offenbart verstanden werden. Die zu der beispielhaften erfindungsgemäßen Vorrichtung und ihren Ausführungsformen beschriebenen Merkmale sollen auch (wiederum in allen möglichen Kombinationen) entsprechend für die weitere beispielhafte erfindungsgemäße Vorrichtung, für das beispielhafte erfindungsgemäße Verfahren und das beispielhafte erfindungsgemäße Computerprogramm offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen:
- Fig. 1a-1d:: Schematische Darstellungen beispielhafter Ausführungsformen von Transporteinheiten;
- Fig. 2a:: eine schematische Detailansicht eines Teils einer Bodenplatte einer Transporteinheit im ungesicherten Zustand;
- Fig. 2b:: eine schematische Detailansicht eines Teils einer Transporteinheit, die durch eine beispielhafte Sicherungskralle gesichert worden ist;
- Fig. 2c:: eine schematische Detailansicht eines Teils einer Transporteinheit, die durch eine beispielhafte Sicherungsklinke gesichert worden ist;
- Fig. 3a:: ein Blockschaltbild eines Ausführungsbeispiels einer erfindungsgemäßen Vorrichtung, die in ein elektronisches Gerät integriert ist;
- Fig. 3b:: ein Blockschaltbild eines weiteren Ausführungsbeispiels einer erfindungsgemäßen Vorrichtung, die mit einem elektronischen Gerät über eine Schnittstelle kommuniziert;
- Fig. 4a:: ein Flussdiagramm eines Ausführungsbeispiels eines erfindungsgemäßen Verfahrens, durchgeführt durch die Vorrichtung der Fig. 3a;
- Fig. 4b:: ein Flussdiagramm eines weiteren Ausführungsbeispiels eines erfindungsgemäßen Verfahrens, durchgeführt durch die Erfassungsmittel der Fig. 3b;
- Fig. 5:: ein Flussdiagramm eines weiteren Ausführungsbeispiels eines erfindungsgemäßen Verfahrens, durchgeführt durch die Vorrichtungen der Fig. 3a oder 3b;
- Fig. 6:: eine schematische Detailansicht eines Teils einer Transporteinheit, die durch eine beispielhafte Sicherungskralle gesichert worden ist und eine beispielhafte Ausführungsform einer an der Transporteinheit angebrachten erfindungsgemäßen Vorrichtung zur Erfassung der Sicherung.

### Detaillierte Beschreibung einiger beispielhafter Ausführungsformen der Erfindung

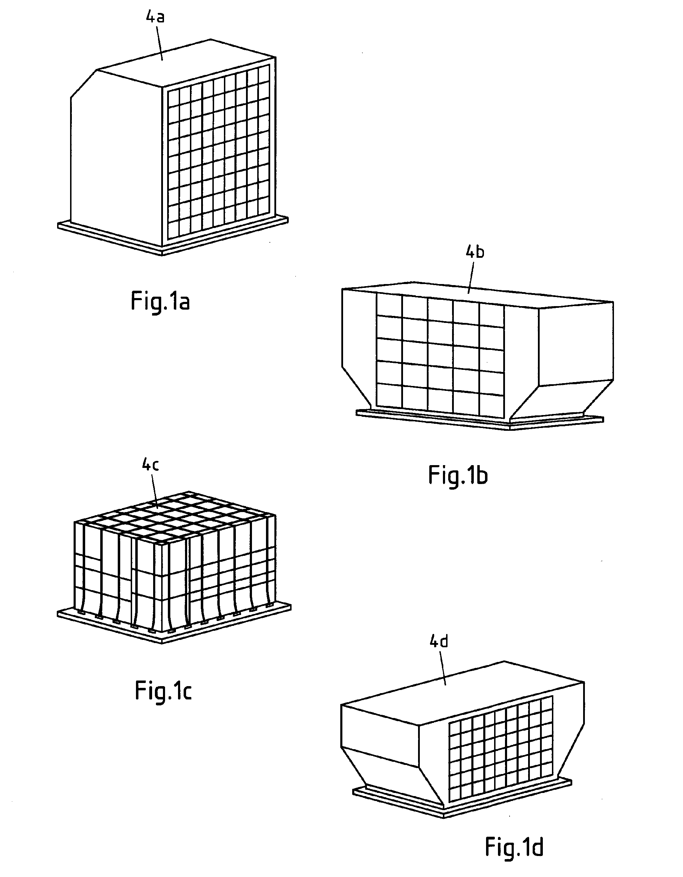

Die Fig. 1a-1d sind schematische Darstellungen beispielhafter Ausführungsformen von Transporteinheiten 4a-4d. Bei den Transporteinheiten 4a, 4b und 4d handelt es sich um Container, während die Transporteinheit 4c eine Palette mit darauf gestapelten und durch ein Netz gesicherten Paketen darstellt. Derartige Transporteinheiten werden in der Logistik als Unit Load Device (ULD) bezeichnet. Wie aus den Fig. 1a-1d ersichtlich ist, existieren unterschiedliche ULDs mit standardisierten Abmessungen, dies trifft insbesondere für die Abmessungen der Bodenplatten zu. Beispielsweise haben die Bodenplatte der ULDs 4a und 4c gleiche Abmessungen (96" x 125"), und auch die Bodenplatten der ULDs 4b und 4d haben gleiche Abmessungen (88" x 125").

Die ULDs 4a-4d können beispielsweise von Frachtflugzeugen (oder auch in Frachträumen von Passagierflugzeugen) transportiert werden. Der Boden des Frachtraums ist dazu üblicherweise mit einer Vielzahl von eingelassenen Rollen oder Kugeln versehen, auf denen die ULDs beim Verladen rollend bewegt werden können. Wenn ein ULD die jeweils für ihn (beispielsweise nach einer speziell für die jeweilige Zusammenstellung von zu transportierenden ULDs bestimmten Beladungskonfiguration) bestimmte Position erreicht hat, wird er mit Sicherungsmitteln gegen eine horizontale und ggfs. auch vertikale Bewegung relativ zum Flugzeug gesichert, da eine solche Bewegung des ULDs während des Flugs katastrophale Auswirkungen auf das Flugverhalten haben und insbesondere zur Beschädigung der ULDs und auch des Flugzeugs führen kann.

Die Sicherungsmittel - beispielsweise Sicherungsklinken oder Sicherungskrallen - können beispielsweise auf allen vier Seiten unmittelbar angrenzend an die Bodenplatte des ULDs in vorbestimmte Öffnungen des Frachtraumbodens eingeführt werden und dann dergestalt aus dem Boden herausragen, dass sie die Bewegung des ULDs in alle vier horizontalen Richtungen einschränken oder komplett unterbinden. Die Sicherungsmittel können auch fest im Frachtraumboden installiert und dann durch Hochklappen oder Hochfahren in eine Position gebracht werden, in der sie über die Oberfläche des Frachtraumbodens (also auch über die Rollen bzw. Kugeln) herausragen und somit die Bewegung der ULDs entsprechend einschränken. Das Hochklappen oder Hochfahren der ULDs kann beispielsweise manuell (beispielsweise per Fußbedienung) oder auch automatisch erfolgen. Im hochgeklappten oder eingeführten Zustand kann das Sicherungsmittel zusätzlich die Bodenplatte des ULD zumindest teilweise übergreifen, um auch eine Bewegung des ULDs in vertikaler Richtung zu unterbinden.

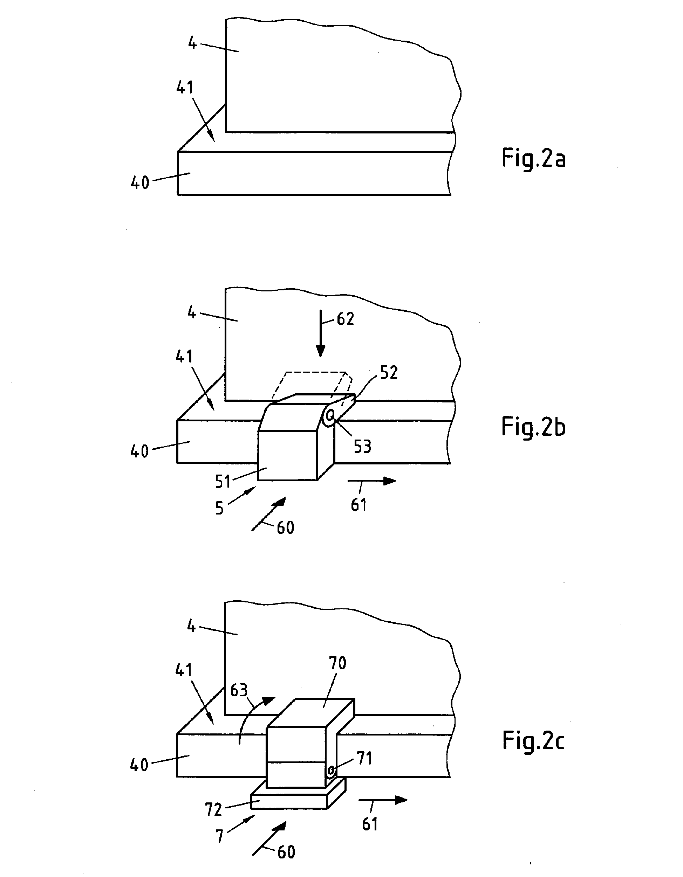

In Fig. 2a ist schematisch ein Teil eines ULDs 4 (beispielsweise von einem der ULDs 4a-4d der Fig. 1a-1d) im ungesicherten Zustand gezeigt. Die Bodenplatte 40 des ULD 4 weist eine Oberfläche 41 auf, die eine umlaufende Kante bildet. Die geometrische Form der Kante ist vorzugsweise bei allen ULDs identisch, um den Einsatz einheitlicher Sicherungsmittel zu ermöglichen.

In Fig. 2b ist die Sicherung des ULDs aus Fig. 2a durch ein Sicherungsmittel 5 dargestellt, hier ausgeführt als Sicherungskralle mit einem Körper 51 und einem gegenüber dem Körper 51 über ein Scharnier 53 verschwenkbaren Arm 52. Die Sicherungskralle 5 ist mit dem Frachtraumboden des Flugzeugs, der sich unterhalb des ULD befindet, zumindest lösbar verbunden. Die Sicherungskralle 5 ist eingerichtet, an die Bodenplatte 40 herangeführt zu werden (Pfeilrichtung 60, beispielsweise in einer Führungsschiene, die im Frachtraumboden ausgebildet oder mit diesem verbunden ist) und dann fixiert zu werden (beispielsweise durch eine Feder oder eine Arretierung), um dadurch eine Bewegung des ULD 4 in entgegen gesetzter Richtung des Pfeils 60 zu unterbinden. Optional kann die Sicherungskralle 5 auch parallel zur Bodenplatte 40 verschiebbar (oder in vorbestimmte, entlang der Bodenplatte 40 befindliche Öffnungen des Frachtraumbodens einführbar) sein, wie durch den Pfeil 61 angedeutet ist. Der Arm 52 der Sicherungskralle 5 kann zusätzlich aus einer gestrichelt dargestellten Position in eine durchgezogen gezeichnete Position heruntergeschwenkt und in dieser Stellung arretiert werden (Pfeilrichtung 62), um dann eine Bewegung des ULD 4 entgegen der Richtung des Pfeils 62 zu unterbinden. In dieser Stellung übergreift der Arm 52 der Sicherungskralle 5 also die Bodenplatte 40; die Sicherungskralle 5 umschließt also formschlüssig zumindest einen Teil der Bodenplatte.

Eine wirkungsvolle Sicherung des ULD 4 gegen Bewegungen in alle vier horizontalen Himmelsrichtungen und gegen eine Bewegung in vertikaler Richtung (also nach oben; die Bewegung nach unten wird durch den Frachtraumboden bzw. die darin eingelassenen Rollen oder Kugeln unterbunden) wird dadurch erzielt, dass zumindest eine Sicherungskralle 5 auf jeder der vier Seiten der rechteckförmigen Bodenplatte 40 des ULD 4 angebracht werden. Es können natürlich auf jeder Seite der Bodenplatte 40 auch mehr als eine Sicherungskralle 5 angebracht werden.

Fig. 2c zeigt ein alternatives Sicherungsmittel, das hier beispielhaft als Sicherungsklinke 7 ausgebildet ist. Die Sicherungsklinke umfasst einem gewinkelten Arm 70, der zumindest teilweise an die Geometrie der Kante 41 der Bodenplatte 40 angepasst ist. Der Arm 70 kann über ein Scharnier 71 gegenüber einer Bodenplatte 70, die mit dem Frachtraumboden zumindest lösbar verbunden ist, aus einer Stellung, in der er im Frachtraumboden versenkt ist, in eine aufrechte, in Fig. 2c dargestellte Position heraufgeklappt werden (wie durch den Pfeil 63 angedeutet wird) und dann arretiert werden, um den ULD 4 gegen eine Bewegung nach oben und entgegen der Richtung des Pfeils 60 zu sichern. Die Sicherungsklinke 7 ist wiederum in Richtung des Pfeils 60 an die Bodenplatte 40 des ULD 4 heranführbar (beispielsweise über ein im Frachtraumboden ausgebildetes Schienensystem) und in dieser Stellung fixierbar (beispielsweise durch eine Feder oder eine Arretierung) und optional auch in Richtung des Pfeils 61 verschiebbar oder versetzbar. Auch die Sicherungskralle 7 der Fig. 2c kann vorzugsweise auf allen vier Seiten der Bodenplatte 40 zur Sicherung eingesetzt werden.

Ausführungsbeispiele der vorliegenden Erfindung betreffen die automatische Abschaltung oder den Betriebsmoduswechsel von elektronischen Geräten, beispielsweise Geräten, die zur Positionsverfolgung von ULDs und/oder zur Übermittlung von den ULD betreffenden Kenngrößen wie z.B. die Temperatur, Erschütterungen etc. dienen. Eine automatische Abschaltung ist beispielsweise zwingend erforderlich, wenn derartige Geräte an ULDs angebracht sind, die in Flugzeugen transportiert werden sollen, da der Betrieb dieser Geräte, insbesondere der Funkbetrieb, die Flugzeugelektronik stören kann. Wenn kein zuverlässiges Verfahren zur Abschaltung oder zum Betriebsmoduswechsel nachgewiesen werden kann, kann die Zulassung derartiger Geräte für Flugtransporte von den Luftfahrtbehörden verweigert werden. Die Abschaltung oder der Betriebsmodus-Wechsel kann aber auch bei Transporten der ULDs in anderen Fahrzeugen vorteilhaft sein, da während des Transports die Übermittlung von Positionsdaten oder Kenngrößen des ULD von dem transportierenden Fahrzeug übernommen werden kann. Dadurch kann am Gerät beispielsweise Strom gespart werden, um die Betriebsdauer des Geräts zu verlängern.

Die vorliegende Erfindung nutzt eine physikalische Gemeinsamkeit im Prozess der Flugzeugbeladung aus, und zwar die oben beschriebene, zwangsläufig erforderliche Sicherung der ULDs im Flugzeug durch Sicherungsmittel vor dem Abflug gegen Verrutschen in alle vier Himmelsrichtungen durch Aktivierung von Sicherungsmitteln auf allen vier Seiten des ULD (dies trifft sowohl auf Transporte in Frachtflugzeugen als auch in Passagierflugzeugen zu). Die Prüfung der erfolgten Sicherung erfolgt durch den Lademeister bzw. das Ladepersonal und kann beispielsweise Vorraussetzung für die Startfreigabe sein.

Dieser Quasistandard lässt sich für das automatische Ausschalten oder den Betriebsmoduswechsel von elektronischen Geräten, die in oder am ULD angebracht sind, ausnutzen.

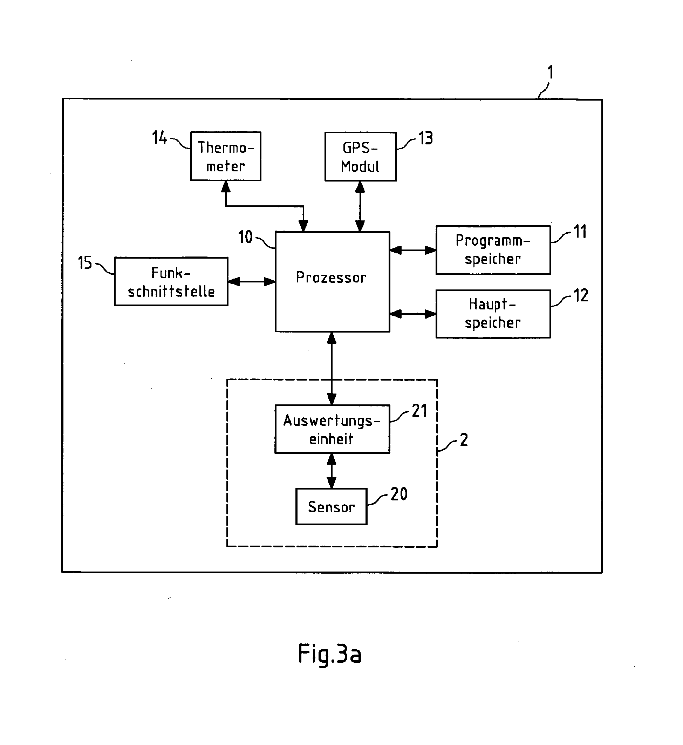

Dies erfolgt in der Form, dass (automatisch) erfasst wird, ob der ULD durch zumindest ein Sicherungsmittel gegen eine Bewegung in zumindest eine Richtung relativ zum Flugzeug gesichert ist (oder worden ist), und durch Änderung eines Betriebsmodus des elektronischen Geräts in Abhängigkeit des Ergebnisses der Erfassung oder zur Ausgabe eines Signals zur Änderung des Betriebsmodus in Abhängigkeit von dem Ergebnis der Erfassung. Fig. 3a zeigt diesbezüglich ein Blockschaltbild eines Ausführungsbcispiels einer erfindungsgemäßen Vorrichtung 1, die in ein elektronisches Gerät integriert ist. Die Vorrichtung 1 wird von einem Prozessor 10 gesteuert. Der Prozessor 10 führt Programmanweisungen eines Computerprogramms aus, dass im Programmspeicher 11 gespeichert ist. Hauptspeicher 12 dient beispielsweise als Arbeitsspeicher und/oder zur Abspeicherung von Daten, die die Vorrichtung gemessen hat (Positionen, Temperaturen, etc.). Die Vorrichtung verfügt vorliegend beispielhaft über ein GPS(Global Positioning System)-Modul 13, mit dem die Vorrichtung basierend auf einem satellitengestützten Positionierungssystem ihre aktuelle Position bestimmen kann. Das GPS-Modul kann natürlich auch zusätzlich oder alternativ andere Positionierungssysteme nutzen, beispielsweise Positionierung nach dem Galileo- oder GLONASS-System oder basierend auf zellularen Mobilfunksystemen. Die Vorrichtung 1 verfügt ferner über einen Temperatursensor 14 zur Erfassung der Umgebungstemperatur. Über eine Funkschnittstelle, beispielsweise gemäß einem (beispielsweise zellularen) Mobilfunksystem, ist die Vorrichtung 1 in der Lage, erfasste Daten, vorliegend beispielsweise die aktuelle Position und die aktuelle Temperatur, an eine Erfassungsstelle, beispielsweise einen Server, zu übertragen. Dies kann beispielsweise in regelmäßigen Abständen oder nur auf Anfrage geschehen. Die Übertragung kann beispielsweise auch nur dann stattfinden, wenn die erfassten Daten bestimmte Grenzwerte überschreiten, beispielsweise eine vordefinierte zulässige Maximaltemperatur. Von der Erfassungsstelle können diese Daten dann beispielsweise von einem Logistikanbieter, der für den Transport des ULDs, dem die Vorrichtung 1 zugeordnet ist, verantwortlich ist, oder einem Kunden, dessen Ware in dem ULD transportiert wird, abgerufen werden.

Die Vorrichtung 1 ist zusätzlich ausgestattet mit Erfassungsmitteln 2, die vorliegend beispielhaft einen Sensor 20 und eine Auswertungseinheit 21 umfassen. Die Funktionalität der Auswertungseinheit 21 kann dabei aber auch ganz oder teilweise von Prozessor 10 übernommen werden. Der Sensor 20 ist eingerichtet zu erfassen, ob der ULD, dem die Vorrichtung 1 zugeordnet ist, durch zumindest ein Sicherungsmittel gesichert ist. Dies kann auf unterschiedlichsten Wegen erfolgen. Beispielsweise kann der Sensor 20 als Kabel ausgeführt sein, das so an der Bodenplatte des ULD angeordnet wird, dass es bei erfolgter Sicherung des ULD durch ein Sicherungsmittel verformt (beispielsweise gequetscht) wird und dadurch eine oder mehrere seiner physikalischen Eigenschaften verändert werden, beispielsweise der elektrische Widerstand. Die Auswertungseinheit 21 ist mit dem Sensor 20 verbunden und wertet die Messungen des Sensors 20 aus, um zu entscheiden, ob tatsächlich eine Sicherung des ULD erfasst wurde (beispielsweise wenn ein Messsignal des Sensors 20 eine vordefinierte Schwelle überschreitet). Die Auswertungseinheit 21 kann auch zusätzlich als Treibereinheit für den Sensor 20 dienen. Wenn der Sensor 20 zur Messung der Änderung des elektrischen Widerstands eingesetzt wird, kann die Auswertungseinheit 21 beispielsweise eingerichtet sein, den dann als Kabel oder Leitung ausgeführten Sensor 20 mit Spannung zu beaufschlagen, um aus der Spannung und dem Stromfluss auf den Widerstand zu schließen. Alternativ kann der Sensor 20 auch als Schlauch ausgeführt sein und dann beispielsweise durch die Auswertungseinheit 21 aufgrund einer Veränderung des Durchflussverhaltens eines Mediums durch den Schlauch bei Verformung des Schlauchs auf eine erfolgte Sicherung geschlossen werden.

Die Auswertungseinheit 21 des Erfassungsmittels 2 gibt im Fall einer erfassten Sicherung ein Signal an den Prozessor 10 aus, der basierend auf diesem Signal dann den Betriebsmodus der Vorrichtung 1 ändert. Beispielsweise kann die Vorrichtung 1 in einen Standby-Modus überführt oder die Funkschnittstelle 15 deaktiviert oder das Versenden von Daten über die Funkschnittstelle 15 eingestellt werden. Zusätzlich kann die Änderung des Betriebsmodus auch optisch oder akustisch durch die Vorrichtung 1 angezeigt werden, um beispielsweise eine zusätzliche Kontrolle zu erlauben, dass die Änderung des Betriebsmodus tatsächlich stattgefunden hat. Beispielsweise kann bei Übergang in den Standby-Modus eine rote Leuchte am Gerät aktiviert werden, die dann während des gesamten Standby-Modus leuchtet.

Die Auswertungseinheit 21 (oder der Prozessor 10) kann ferner eingerichtet sein, die korrekte Funktionsweise des Sensors 20 und/oder des Erfassungsmittels 2 zu prüfen. Beispielsweise kann, wenn eine Beschädigung des Sensors 20 oder des Erfassungsmittels 2 festgestellt wird, automatisch eine Änderung des Betriebsmodus (beispielsweise eine Abschaltung oder ein Übergang in einen Standby-Modus) der Vorrichtung 1 ausgelöst werden. Eine Beschädigung kann beispielsweise dadurch erkannt werden, dass - im Falle einer elektrischen Leitung als Sensor 20 - kein Strom mehr durch die elektrische Leitung fließt.

Ein Übergang in einen aktiven Betriebsmodus kann beispielsweise erst dann wieder möglich sein, wenn die elektrische Leitung ersetzt wird.

Die Vorrichtung 1 gemäß Fig. 3a kann beispielsweise nachträglich an einem zu überwachenden ULD befestigt werden und beinhaltet sowohl die Komponenten zur Überwachung als auch die Komponenten zur automatischen Abschaltung oder Änderung des Betriebsmodus.

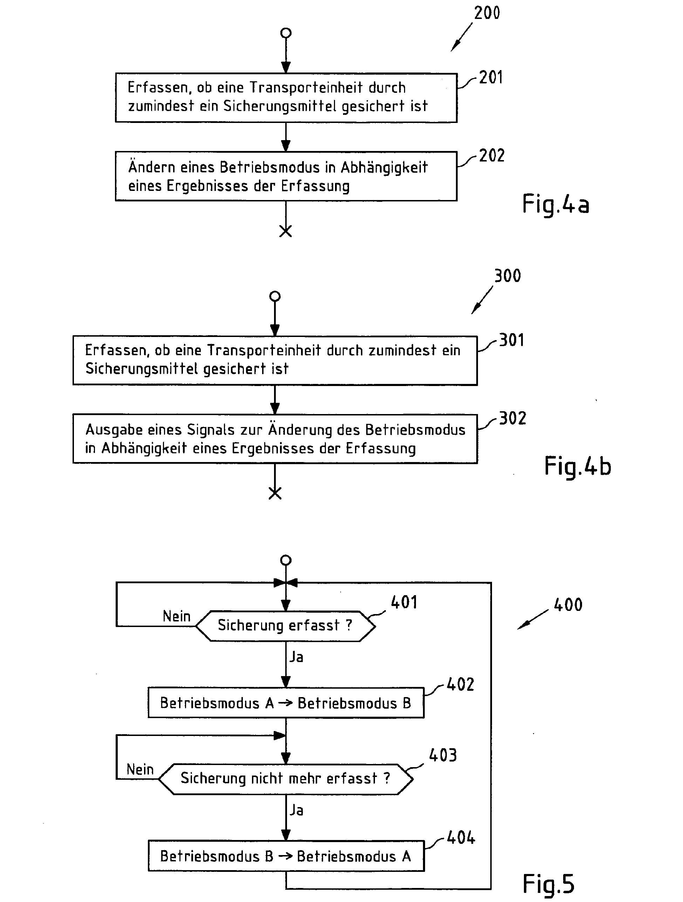

Die Operation der Vorrichtung 1 entspricht den Verfahrensschritten 201-202 des Flussdiagramms 200 der Fig. 4a. Verfahrensschritt 201 (Erfassung, ob eine Sicherung vorliegt) wird beispielsweise durch den Prozessor 10 gesteuert (beispielsweise durch regelmäßige Abfrage des Erfassungsmittels 2). Verfahrensschritt 202 (Ändern des Betriebsmodus) wird beispielsweise durch den Prozessor 10 durchgeführt.

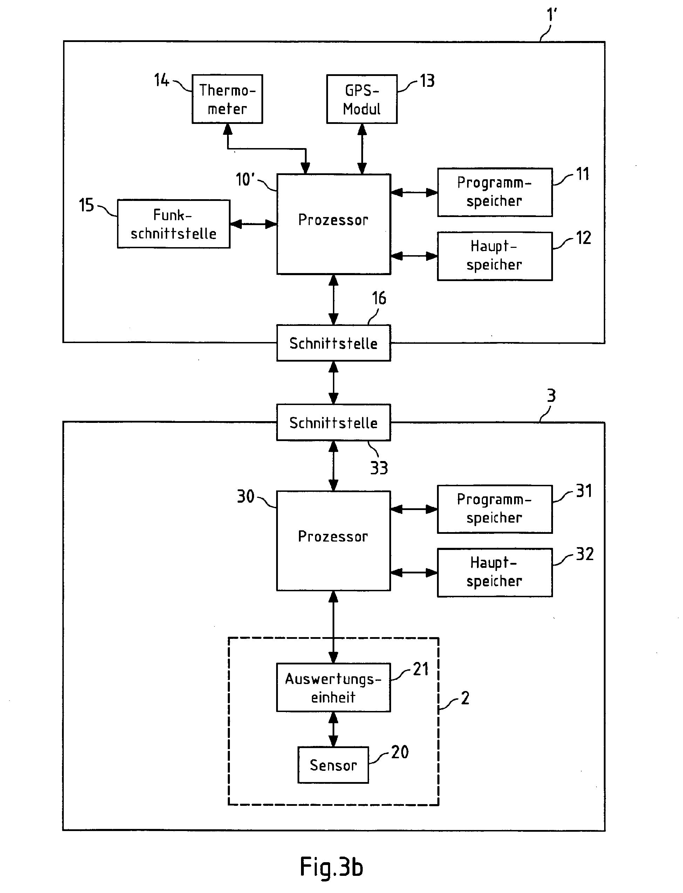

Fig. 3b zeigt eine alternative Ausführungsform einer erfindungsgemäßen Vorrichtung 3, die über eine Schnittstelle mit einem elektronischen Gerät 1 kommuniziert. Hier entsprechen die Komponenten, die die gleichen Bezugszeichen tragen wie in Fig. 3a, den dort gezeigten und beschriebenen Komponenten.

In Fig. 3b weist das elektronische Gerät 1' wiederum einen Prozessor 10' mit Programmspeicher 11 und Hauptspeicher 12 auf. Der Prozessor 10' ist jedoch gegenüber dem Prozessor 10 der Fig. 3a modifiziert, da er nicht mehr direkt mit den Erfassungsmitteln 2 kommuniziert, sondern über eine Schnittstelle 16. Das elektronische Gerät 1' umfasst ferner einen Temperatursensor 14 und ein GPS-Modul 13 zur Erfassung der aktuellen Temperatur und aktuellen Position, und eine Funkschnittstelle 15 zur Übertragung der erfassten Daten an eine Datensenke.

In Fig. 3b sind die Erfassungsmittel 2 nicht mehr Teil des elektronischen Geräts 1', sondern sind in einem separaten Gerät 3 untergebracht, das einen steuernden Prozessor 30 mit zugeordnetem Programmspeicher 31 und Hauptspeicher 32 umfasst. Anstelle des Prozessors 30 und der zugeordneten Speicher 31 und 32 kann alternativ auch eine Logikschaltung vorgesehen sein. Die Funktionalität der Auswertungseinheit kann ganz oder teilweise von Prozessor 30 übernommen werden. Die Erfassungsmittel 2 umfassen wiederum einen Sensor 20 und eine Auswertungseinheit 21 mit gleicher Funktion wie zu Fig. 3a beschrieben. Wenn die Erfassungseinheit 2 eine erfolgte Sicherung eines ULD, dem die Vorrichtung 3 zugeordnet ist, erfasst, gibt sie ein entsprechendes Signal an den Prozessor 30 aus. Der Prozessor 30 gibt dann über die Schnittstelle 33 ein Signal an das elektronische Gerät 1' aus, das eine Änderung des Betriebsmodus des elektronischen Geräts 1' auslösen soll. Dazu empfängt Prozessor 10' des elektronischen Geräts 1' das Signal über die Schnittstelle 16 und nimmt die Änderung des Betriebsmodus entsprechend vor. Die Schnittstelle 16/33 ist bevorzugt eine drahtgebundene Schnittstelle, beispielsweise ein Paar aus Stecker und Buchse.

In einem möglichen Anwendungsszenario für die Vorrichtung 3 aus Fig. 3b ist die Vorrichtung 3 fest mit einem ULD verbunden (beispielsweise bereits bei der Herstellung, oder alternativ im Rahmen einer Nachrüstung). Wenn ein elektronisches Gerät 1' dem ULD zugeordnet werden soll, beispielsweise als Tracking/Telematik-Gerät, kann das elektronische Gerät 1' am ULD (beispielsweise lösbar) befestigt werden und über die Schnittstelle 16 mit der Schnittstelle 33 der Vorrichtung 3 verbunden werden. Die Befestigung des elektronischen Geräts 1' am ULD kann beispielsweise dadurch erfolgen, dass das elektronische Gerät 1' in die Vorrichtung 3 eingesteckt und dabei die Schnittstellen 16 und 33 verbunden werden.

Die Operation der Vorrichtung 3 entspricht den Verfahrensschritten 301-302 des Flussdiagramms 300 der Fig. 4b. Der Verfahrensschritt 301 (Erfassung, ob eine Sicherung vorliegt) wird beispielsweise durch den Prozessor 30 gesteuert (beispielsweise durch regelmäßige Abfrage des Erfassungsmittels 2) oder ausgeführt (wenn die Funktionalität der Auswertungseinheit 21 durch den Prozessor 30 gebildet wird). Verfahrensschritt 302 (Ausgabe des Signals zur Änderung des Betriebsmodus) wird beispielsweise durch den Prozessor 30 durchgeführt.

Fig. 5 zeigt ein Flussdiagramm eines weiteren Ausführungsbeispiels eines erfindungsgemäßen Verfahrens, dass von der Vorrichtung 1 der Fig. 3a oder der Vorrichtung 3 der Fig. 3b ausgeführt werden kann. In diesem Ausführungsbeispiel wird nicht nur der Betriebsmodus des elektronischen Geräts 1/1' bei erfasster Sicherung geändert, sondern dieser Betriebsmodus auch wieder verlassen, wenn festgestellt wird, dass keine Sicherung mehr besteht. Das Verfahren kann wiederum von den Prozessoren 10 und 30 der Vorrichtungen 1 und 3 gesteuert bzw. ausgeführt werden.

In einem Schritt 401 wird geprüft, ob eine Sicherung des ULD durch zumindest ein Sicherungsmittel erfasst wurde. Wenn dies nicht der Fall ist, wird die Prüfung in einer Endlosschleife wiederholt, bis eine Sicherung erfasst wurde. In diesem Fall wird Schritt 402 ausgeführt und entweder der Betriebsmodus von einem ersten Betriebsmodus A (beispielsweise ein Betriebsmodus mit Funkbetrieb) in einen zweiten Betriebsmodus (beispielsweise ein Betriebsmodus ohne Funkbetrieb) geändert (Vorrichtung 1) oder diese Änderung durch Ausgabe eines Signals angestoßen (Vorrichtung 3).

Dann wird in einem Schritt 403 geprüft, ob die Sicherung des ULD durch zumindest ein Sicherungsmittel noch besteht. Wenn dies der Fall ist, wird in einer Endlosschleife geprüft, ob dies immer noch der Fall ist. Anderenfalls wird Schritt 404 ausgeführt und der Betriebsmodus B wieder in den Betriebsmodus A geändert (Vorrichtung 1) bzw. die Änderung des Betriebsmodus B in den Betriebsmodus A durch Ausgabe eines Signals angestoßen.

In Schritt 404 kann anstelle des ursprünglichen Betriebsmodus A auch ein anderer Betriebsmodus C eingestellt oder ausgelöst werden, beispielsweise ein Betriebsmodus, der zunächst während des Betriebsmodus B durch die Vorrichtungen 1 und 1' weiter erhobene Daten (Positionen, Temperaturen) über die Funkschnittstelle 15 an die Datensenke überträgt (um beispielsweise an der Datensenke keine Diskontinuitäten in der Positionsverfolgung bzw. der Temperaturverfolgung zu erzeugen) und dann erst in einen Betriebsmodus übergeht, der dem Betriebsmodus A entspricht.

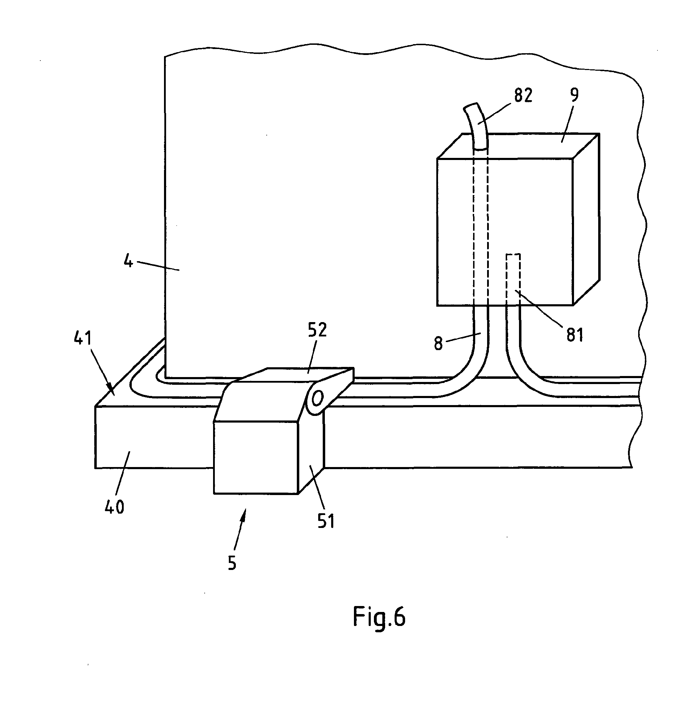

Fig. 6 zeigt schließlich eine schematische Detailansicht eines Teils eines ULD 4, der durch eine beispielhafte Sicherungskralle 5 gesichert worden ist und eine beispielhafte Ausführungsform einer am ULD 4 angebrachten (beispielsweise durch Einschieben in eine am ULD befestigte Dokumententasche) erfindungsgemäßen Vorrichtung zur Erfassung der Sicherung.

Bei der Vorrichtung handelt es sich beispielhaft um eine Vorrichtung 1, wie sie in Fig. 3a dargestellt ist (alternativ kann es sich aber natürlich auch um die Vorrichtung 3 aus Fig. 3b handeln), also mit Funktionalität zur Erhebung von Positions- und Sendungsintegritätsdaten (beispielsweise Temperatur, Erschütterungen, Lichteinfall, etc.), zur funkbasierten Übermittlung der erhobenen Daten an eine Datensenke und zur Erfassung, ob der ULD 4 durch zumindest ein Sicherungsmittel 5 gesichert ist. Alle in Fig. 3a gezeigten Komponenten sind dabei im Gehäuse 9 untergebracht, bis auf den Sensor 20, der vorliegend beispielhaft als Kabel 8 ausgebildet und zum größten Teil außerhalb des Gehäuses angeordnet ist. Die Auswertungseinheit 21 (vgl. Fig. 3a) befindet sich also ebenfalls im Gehäuse 9 und ist eingerichtet, eine Änderung des elektrischen Widerstands des Kabels 9, die sich dann einstellt, wenn das Kabel 8 an mindestens einer Stelle durch den Arm 52 der Sicherungskralle 5 gegen die Oberfläche 41 der Bodenplatte 40 gedrückt wird (da der elektrische Widerstand eines Leiters antiproportional zur Querschnittsfläche des Leiters ist), zu detektieren und dann ein entsprechendes Signal an den Prozessor 10 (vgl. Fig. 3a) zu übermitteln, damit dieser eine Änderung des Betriebsmodus aufgrund der erfassten Sicherung vornimmt. Alternativ zur Messung der Änderung des elektrischen Widerstands können auch andere Sensierungsverfahren, die beispielsweise auf einer durch die Sicherungskralle 5 ausgeübten Kraft- oder Druckeinwirkung oder auf einem Kontakt zu der Sicherungskralle 5 beruhen, eingesetzt werden. Beispielsweise können anstelle eines Kabels ein Band mit darauf oder darin befindlichen Sensoren, beispielsweise Piezo-Sensoren oder kapazitive oder induktive Sensoren verwendet werden.

Im vorliegenden Ausführungsbeispiel der Fig. 6 ist ein Ende 81 des Kabels 8 fest im Gehäuse 9 befestigt (es kann dort alternativ aber auch lösbar befestigt sein), während das andere Ende 82 lösbar mit dem Gehäuse 9 verbindbar ist. So kann beispielsweise, wenn das Gehäuse 9 an dem ULD (beispielsweise lösbar) angebracht wird, mit dem losen Ende 82 einmal um den ULD 4 herumgegangen und dabei das Kabel auf der Oberfläche 41 der Bodenplatte ausgebracht werden. Nach vollendetem Rundgang wird das lose Ende 82 dann in das Gehäuse 9 eingeführt (beispielsweise so dass das Kabel gespannt ist) und elektrisch mit der Auswertungseinheit 20 (vgl. Fig. 3a) verbunden, beispielsweise durch eine Steckverbindung (in Fig. 6 nicht gezeigt). Ab diesem Zeitpunkt kann dann eine Erfassung erfolgen, ob eine Sicherung des ULD 4 durch eine Sicherungskralle 5 erfolgt ist.

Das Kabel 8 kann zumindest teilweise in dem Gehäuse 9 aufrollbar sein (beispielsweise am Ende 81, beispielsweise mit einem arretierbaren automatischen Kabeleinzug ), damit auch bei unterschiedlichen Abmessungen des ULD 4 immer nur so viel des Kabels 8 aus dem Gehäuse 9 herausgezogen wird, wie zur Auslegung des Kabels 8 auf der umlaufenden Kante 41 erforderlich ist und sich keine Schlaufen bilden, die die Funktionsweise der Erfassung der Sicherung beeinträchtigen könnten.

Das Kabel 8 kann vorzugsweise zumindest stellenweise flach (also mit länglichem statt kreisrundem Querschnitt) ausgebildet sein, damit es auf der umlaufenden Kante 41 flach aufliegt. Es kann auch zumindest mit einer Oberflächenstruktur oder mit Mitteln beaufschlagt sein, die ein Verrutschen auf der Kante 41 verhindern. Dies kann beispielsweise durch Mittel zum zumindest teilweisen Aufkleben des Kabels 8 auf die Kante 41 erzielt werden (beispielsweise am Kabel 8 angebrachte Haftetiketten, oder durch doppelseitiges Klebeband). Wenn die Bodenplatte des ULD 4 zumindest teilweise aus magnetischem Material besteht, können an dem Kabel 8 auch Mittel zur magnetischen Fixierung des Kabels 8 auf der Kante 41 vorgesehen sein. Generell kann eine geeignete Positionierung des Kabels 8 auf der Kante 41 durch ein Festziehen des Kabels 8 nach der Umrundung des ULD 4 mit dem Kabel 8 unterstützt werden.

Das Kabel 8 ist vorzugsweise robust ausgestaltet, damit es durch die Sicherungskralle 5 auch bei häufigem Einsatz nicht beschädigt oder zerstört wird. Diese Robustheit kann beispielsweise durch eine flache Bauart und/oder durch eine entsprechende Ummantelung aus einem robusten Werkstoff gewährleistet werden.

Die dem Kabel 8 (das vorliegend beispielhaft den Sensor 20 in den Fig. 3a und 3b darstellt) zugeordnete Auswertungseinheit 21 (vgl. Fig. 3a/3b) kann beispielsweise so eingerichtet sein, dass bereits beim Zusammenpressen des Kabels 8 durch lediglich eine Sicherungskralle 5 ein die Sicherung des ULD 4 anzeigendes Signal an den Prozessor 10 (Fig. 3a) oder 30 (Fig. 3b) ausgegeben wird. Alternativ kann allerdings auch erst beim Zusammenpressen des Kabels 8 durch zwei oder mehr (beispielsweise vier) Sicherungskrallen 5 ein die Sicherung des ULD 4 anzeigendes Signal ausgegeben werden. Diese Maßnahme kann die Robustheit gegen Fehlalarme erhöhen, da die Änderung des Widerstands im Kabel 8 beim Zusammenpressen an mehr als einer Stelle größer ist als lediglich an einer Stelle.

Sobald der ULD 4 also im Flugzeug positioniert wurde und die Sicherungskrallen 5 herunterfahren, drücken diese das Kabel 8 fest an den ULD 4, wodurch das elektronische Gerät beispielsweise in den Standby-Modus schaltet und flugsicher ist. Nach der Landung und dem Entlasten der Sicherungskrallen 5 in der Parkposition schaltet sich das elektronische Gerät dann beispielsweise wieder automatisch an, wie es zu Fig. 5 bereits beschrieben wurde.

Wenn ein die Sicherung des ULD anzeigendes Signal von dem Erfassungsmittel erst dann ausgegeben wird, wenn eine vordefinierte Anzahl von Sicherungsmitteln eingesetzt wurde (beispielsweise eine vordefinierte Zahl (z.B. eins oder zwei) von Sicherungsmitteln auf jeder der vier Seiten des ULD), kann das ausgegebene Signal zusätzlich oder alternativ zur Änderung des Betriebsmodus des elektronischen Geräts auch zu anderen Zwecken genutzt werden, beispielsweise zur Steuerung einer dem ULD zugeordneten (beispielsweise an diesem angebrachten) Anzeige, die - beispielsweise für den Lademeister - anzeigt, dass der ULD jetzt gesichert ist, oder zur Übertragung an eine Überwachungseinheit (beispielsweise im Fahrzeug), die beispielsweise die Sicherung aller im Fahrzeug geladenen ULDs überwacht und beispielsweise den Transport (z.B. den Flug) nur dann freigibt, wenn für alle ULDs signalisiert wurde, dass diese gesichert sind.

Wie aus dem Ausführungsbeispiel der Fig. 6 ersichtlich ist, ist der ULD 4 mit der im Gehäuse 9 befindlichen Vorrichtung und dem Kabel 8 (also der gesamten Vorrichtung 1 gemäß Fig. 3a) nachrüstbar. Alternativ können aber auch zumindest einige Bestandteile, beispielsweise das Kabel 8 (und ggfs. auch die Komponenten der Vorrichtung 3 aus Fig. 3b) bereits fester Bestandteil des ULD 4 sein (also beispielsweise bereits bei der Herstellung des ULD integriert worden sein oder nach der Herstellung des ULD einmalig fest mit diesem verbunden worden sein), beispielsweise um eine besonders vorteilhaft Positionierung des Kabels 8 auf der Kante 41 zu gewährleisten.

Die Erfindung wurde anhand von beispielhaften Ausführungsformen beschrieben. Die Erfindung ist aber nicht auf diese konkreten Ausführungsformen eingeschränkt.

Die Abfolge der in dieser Spezifikation geschilderten Verfahren schritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

## Patentansprüche

1. Vorrichtung (1; 3), umfassend:
- Erfassungsmittel (2) zum Erfassen, ob eine von einem Fahrzeug zu transportierende Transporteinheit (4) durch zumindest ein Sicherungsmittel (5; 7) gegen eine Bewegung in zumindest eine Richtung relativ zum Fahrzeug gesichert ist, und
- Mittel (10; 30) zum Ändern eines Betriebsmodus eines der Transporteinheit (4) zugeordneten elektronischen Geräts in Abhängigkeit von einem Ergebnis des Erfassens oder zur Ausgabe eines Signals zur Änderung des Betriebsmodus in Abhängigkeit von dem Ergebnis des Erfassens;
**dadurch gekennzeichnet, dass** die Änderung des Betriebsmodus des elektronischen Geräts eine Deaktivierung und/oder Aktivierung zumindest einer Funkkomponente des elektronischen Geräts umfasst,
dass zumindest ein Teil (20) des Erfassungsmittels (2) eingerichtet ist, zwischen dem Sicherungsmittel (5; 7) und zumindest einem Teil (41) der Transporteinheit (4), über den das Sicherungsmittel (5; 7) die Transporteinheit (4) gegen die Bewegung in die zumindest eine Richtung relativ zum Fahrzeug sichert, angeordnet zu werden,
dass zumindest der Teil (20; 8) des Erfassungsmittels (2), der zwischen dem Sicherungsmittel (5; 7) und zumindest dem Teil (41) der Transporteinheit (4) angeordnet werden kann, so flexibel ausgebildet ist, dass der Teil (20; 8) des Erfassungsmittels (2) um die Transporteinheit (4) herumgeführt werden kann.

2. Vorrichtung nach Anspruch 1, wobei ein erster Betriebsmodus mit Funkaktivität aktiv ist, solange keine Sicherung der Transporteinheit erfasst ist, und ein zweiter Betriebsmodus ohne Funkaktivität aktiv ist, solange die Sicherung der Transporteinheit durch zumindest ein Sicherungsmittel erfasst wird.

3. Vorrichtung (1; 3) nach einem der Ansprüche 1-2, wobei es sich bei dem Teil (41) der Transporteinheit (4) um einen Teil einer Bodenplatte (40) oder um einen Teil eines in Bodennähe ausgebildeten Profils der Transporteinheit (4) handelt.

4. Vorrichtung (1; 3) nach einem der Ansprüche 1-3, wobei das Sicherungsmittel (5; 7) den Teil (41) der Transporteinheit (4) zumindest teilweise übergreift, wenn die Transporteinheit (4) durch das Sicherungsmittel (5; 7) gesichert ist.

5. Vorrichtung (1; 3) nach einem der Ansprüche 1-4, wobei das Erfassungsmittel (2) eingerichtet ist, die Sicherung der Transporteinheit (4) durch das Sicherungsmittel (5; 7) basierend auf einem Kontakt zu erfassen, der sich zwischen dem Sicherungsmittel (5; 7) und dem Teil (41) des Erfassungsmittels (2) ausbildet, wenn die Transporteinheit (4) durch das Sicherungsmittel (5; 7) gesichert ist.

6. Vorrichtung (1; 3) nach einem der Ansprüche 1-5, wobei das Erfassungsmittel (2) eingerichtet ist, die Sicherung der Transporteinheit (4) durch das Sicherungsmittel (5; 7) basierend auf einer Kraft zu erfassen, die von dem Sicherungsmittel (5; 7) auf den zwischen dem Sicherungsmittel (5; 7) und dem Teil (41) der Transporteinheit (4) angeordneten Teil (20; 8) des Erfassungsmittels (2) ausgeübt wird, wenn die Transporteinheit (4) durch das Sicherungsmittel (5; 7) gesichert ist.

7. Vorrichtung (1; 3) nach Anspruch 6, wobei die Kraft in dem Teil (20; 8) des Erfassungsmittels (2) eine Änderung eines elektrischen Widerstands, einer elektrischen Kapazität, einer elektrischen Induktivität, einer elektrischen Spannung, eines Magnetfelds oder eines Drucks bewirkt und basierend auf dieser Änderung von dem Erfassungsmittel (2) die Sicherung der Transporteinheit (4) durch das Sicherungsmittel (5; 7) erfasst wird.

8. Vorrichtung nach einem der Ansprüche 1-7, wobei zumindest der Teil (20; 8) des Erfassungsmittels (2), der zwischen dem Sicherungsmittel (5; 7) und zumindest dem Teil (41) der Transporteinheit (4) angeordnet werden kann, als Band, Kabel oder Leitung ausgebildet ist.

9. Vorrichtung (1; 3) nach einem der Ansprüche 1-8, wobei ein Ende des Teils (20; 8) des Erfassungsmittels (2) fest mit der Vorrichtung (1; 3) verbunden ist, und das andere Ende des Teils (20; 8) des Erfassungsmittels (2) lösbar mit der Vorrichtung (1; 3) verbindbar ist.

10. Vorrichtung (1; 3) nach einem der Ansprüche 1-9, wobei die Änderung des Betriebsmodus des elektronischen Geräts zumindest eine der folgenden Änderungen umfasst:
- Aus- und/oder Anschalten des elektronischen Geräts;
- Unterbrechung und/oder Wiederherstellung einer Stromversorgung des elektronischen Geräts;
- Übergang in einen und/oder Verlassen eines Standby-Modus des elektronischen Geräts;
- Übergang in einen und/oder Verlassen eines Modus, in dem das elektronische Gerät keine Informationen sendet oder senden kann.

11. Vorrichtung (1; 3) nach einem der Ansprüche 1-10, wobei die Vorrichtung (1; 3) ein Teil des elektronischen Geräts (1) ist oder lösbar mit dem elektronischen Gerät (1') verbindbar ist.

12. Vorrichtung (1; 3) nach einem der Ansprüche 1-10, wobei die Vorrichtung (1; 3) ein Teil der Transporteinheit (4) ist oder lösbar mit der Transporteinheit (4) verbindbar ist.

13. Vorrichtung (1'), umfassend:
- Mittel (16) zum Empfangen des von einer Vorrichtung (3) nach einem der Ansprüche 1-12, die das Mittel zur Ausgabe eines Signals zur Änderung des Betriebsmodus in Abhängigkeit von dem Ergebnis des Erfassens umfasst, ausgegebenen Signals, und
- Mittel (10') zum Ändern des Betriebsmodus des elektronischen Geräts (1') basierend auf dem empfangenen Signal.

14. Verfahren (200; 300; 400), umfassend:
- Erfassen (201; 301; 401), ob eine von einem Fahrzeug zu transportierende Transporteinheit (4) durch zumindest ein Sicherungsmittel (5; 7) gegen eine Bewegung in zumindest eine Richtung relativ zum Fahrzeug gesichert ist, mit einem Erfassungsmittel (2) und
- Ändern (201; 402; 404) eines Betriebsmodus eines der Transporteinheit (4) zugeordneten elektronischen Geräts in Abhängigkeit von einem Ergebnis des Erfassens oder Ausgeben (302; 402; 404) eines Signals zur Änderung des Betriebsmodus des elektronischen Geräts in Abhängigkeit von einem Ergebnis des Erfassens mit einem Mittel (10; 30) zum Ändern des Betriebsmodus;
**dadurch gekennzeichnet, dass** die Änderung des Betriebsmodus des elektronischen Geräts eine Deaktivierung und/oder Aktivierung zumindest einer Funkkomponente des elektronischen Geräts umfasst,
dass zumindest ein Teil (20) des Erfassungsmittels (2) eingerichtet ist, zwischen dem Sicherungsmittel (5; 7) und zumindest einem Teil (41) der Transporteinheit (4), über den das Sicherungsmittel (5; 7) die Transporteinheit (4) gegen die Bewegung in die zumindest eine Richtung relativ zum Fahrzeug sichert, angeordnet zu werden,
dass zumindest der Teil (20; 8) des Erfassungsmittels (2), der zwischen dem Sicherungsmittel (5; 7) und zumindest dem Teil (41) der Transporteinheit (4) angeordnet werden kann, so flexibel ausgebildet ist, dass der Teil (20; 8) des Erfassungsmittels (2) um die Transporteinheit (4) herumgeführt werden kann.

15. Computerprogramm, umfassend Programmanweisungen, die einen Prozessor (10; 30) zur Ausführung und/oder Steuerung der Schritte des Verfahrens (200; 300; 400) gemäß Anspruch 14 veranlassen, wenn das Computerprogramm auf dem Prozessor (10; 30) läuft.

## Claims

1. Apparatus (1; 3), comprising:
- Detecting means (2) for detecting whether a transport unit (4) to be transported by a vehicle is secured by at least one securing means (5; 7) against a movement in at least one direction relative to the vehicle, and
- means (10; 30) for changing an operating mode of an electronic device associated with the transport unit (4) depending on a result of the detecting or for outputting a signal for changing the operating mode depending on the result of the detecting,
**characterized in**
**that** the change in the electronic device's operating mode comprises deactivation and/or activation of at least one radio component of the electronic device,
**that** at least a part (20) of the detecting means (2) is configured to be arranged between the securing means (5; 7) and at least a part (41) of the transport unit (4), via which the securing means (5; 7) secures the transport unit (4) against movement in at least one direction relative to the vehicle,
**that** at least the part (20; 8) of the detecting means (2) that can be arranged between the securing means (5; 7) and at least the part (41) of the transport unit (4) is configured in flexible form so that the part of the detecting means can be guided around the transport unit (4).

2. Apparatus according to claim 1, wherein a first operating mode with radio activity is active as long as no securement of the transport unit is detected, and a second operating mode without radio activity is active while the securement of the transport unit by at least one securing means is detected.

3. Apparatus (1; 3) according to any of the claims 1-2, wherein the part (41) of the transport unit (4) is a part of a base plate (40) or a part of a profile near the bottom of the transport unit (4).

4. Apparatus (1; 3) according to any of the claims 1-3, wherein the securing means (5; 7) overlaps the part (41) of the transport unit (4) at least partially when the transport unit (4) is secured by the securing means (5; 7).

5. Apparatus (1; 3) according to any of the claims 1-4, wherein the detecting means (2) is configured to detect the securement of the transport unit (4) by the securing means (5; 7) on the basis of a contact that is formed between the securing means (5; 7) and at least a part (41) of the transport unit (4) when the transport unit (4) is secured by the securing means (5; 7).

6. Apparatus (1; 3) according to any of the claims 1-5, wherein the detecting means (2) is configured to detect the securement of the transport unit (4) by the securing means (5; 7) on the basis of a force that is exerted by the securing means (5; 7) on the part (20; 8) of the detecting means (2) arranged between the securing means (5; 7) and the part (41) of the transport unit (4) when the transport unit (4) is secured by the securing means (5; 7).

7. Apparatus (1; 3) according to claim 6, wherein the force causes a change in an electric resistance, an electric capacity, an electric inductivity, an electric voltage, a magnetic field or a pressure in the part (20; 8) of the detecting means (2) and wherein securement of the transport unit (4) by the securing means (5; 7) is detected based on this change.

8. Apparatus (1; 3) according to any of the claims 1-7, wherein at least the part (20; 8) of the detecting means (2) that can be arranged between the securing means (5; 7) and the part (41) of the transport unit (4) is configured as belt, cable or conduit

9. Apparatus (1; 3) according to any of the claims 1-8, wherein one end of the part (20; 8) of the detecting means (2) is fixedly connected to the apparatus (1; 3) and the other end of the part (20; 8) of the detecting means (2) is detachably connectable to the apparatus (1; 3).

10. Apparatus (1; 3) according to any of the claims 1-9, wherein the change in the electronic device's operating mode comprises at least one of the following changes:
- Switching the electronic device on and/or off;
- interruption and/or restoration of a power supply to the electronic device;
- transition to and/or exiting of a standby mode of the electronic device;
- transition to and/or exiting of a mode in which the electronic device transmits no information or can transmit no information.

11. Apparatus (1; 3) according to any of the claims 1-10, wherein the apparatus (1; 3) is a part of the electronic device (1) or is detachably connectable to the electronic device (1').

12. Apparatus (1; 3) according to any of the claims 1-10, wherein the apparatus (1; 3) is a part of the transport unit (4) or is detachably connectable to the transport unit (4).

13. Apparatus (1'), comprising:
- Means (16) for receiving the signal output by an apparatus (3) according to any of the claims 1-12 that comprises the means for outputting a signal for changing the operating mode depending on the result of the detecting, and
- means (10') for changing the operating mode of the electronic device (1') on the basis of the received signal.

14. Method (200; 300; 400), comprising:
- Detecting (201; 301; 401), with a detecting means (2), whether a transport unit (4) to be transported by a vehicle is secured by at least one securing means (5; 7) against a movement in at least one direction relative to the vehicle, and
- Changing (201; 402; 404), with a means (10; 30) for changing an operating mode, an operating mode of an electronic device associated with the transport unit (4), depending on a result of the detecting or outputting (302; 402; 404) a signal for changing the operating mode of the electronic device, depending on the result of the detecting,
**characterized in**
**that** the change in the electronic device's operating mode comprises deactivation and/or activation of at least one radio component of the electronic device,
**that** at least a part (20) of the detecting means (2) is configured to be arranged between the securing means (5; 7) and at least a part (41) of the transport unit (4), via which the securing means (5; 7) secures the transport unit (4) against movement in at least one direction relative to the vehicle,
**that** at least the part (20; 8) of the detecting means (2) that can be arranged between the securing means (5; 7) and at least the part (41) of the transport unit (4) is configured in flexible form so that the part of the detecting means can be guided around the transport unit (4).

15. Computer program comprising program instructions that cause a processor (10; 30) to execute and/or control the method (200; 300; 400) according to claim 14 when the computer program is running on the processor (10; 30).

## Revendications

1. Dispositif (1 ; 3) comprenant :
- un moyen de détection (2) permettant de détecter si une unité de transport (4) à transporter par un véhicule est protégé par au moins un moyen de blocage (5 ; 7) contre un déplacement dans au moins une direction par rapport au véhicule, et
- des moyens (10 ; 30) pour modifier un mode de fonctionnement d'un appareil électronique associé à l'unité de transport (4), en fonction d'un résultat de la détection, ou pour émettre un signal pour la modification du mode de fonctionnement en fonction du résultat de la détection ;
**caractérisé**
**en ce que** la modification du mode de fonctionnement de l'appareil électronique comprend la désactivation et/ou l'activation d'au moins un composant radio de l'appareil électronique,
**en ce qu'**une partie (20) du moyen de détection (2) est conçue pour être agencée entre le moyen de blocage (5 ; 7) et au moins une partie (41) de l'unité de transport (4), par laquelle le moyen de blocage (5 ; 7) protège l'unité de transport (4) contre le déplacement dans l'au moins une direction par rapport au véhicule,
**en ce qu'**au moins la partie (20 ; 8] du moyen de détection (2) susceptible d'être agencée entre le moyen de blocage (5 ; 7) et au moins la partie (41) de l'unité de transport (4) est conçue souple, de sorte que la partie (20 ; 8) du moyen de détection (2) peut être disposée autour de l'unité de transport (4).

2. Dispositif selon la revendication 1, dans lequel un premier mode de fonctionnement est actif avec une activité radio tant qu'aucun blocage de l'unité de transport n'est détecté, et un deuxième mode de fonctionnement est actif dans activité radio tant que le blocage de l'unité de transport par au moins un moyen de blocage est détecté.

3. Dispositif (1 ; 3) selon l'une des revendications 1-2, dans lequel la partie (41) de l'unité de transport (4) est une partie d'une plaque de fond (40) ou une partie d'un profil de l'unité de transport (4) formé à proximité du sol.

4. Dispositif (1 ; 3) selon l'une des revendications 1-3, dans lequel le moyen de blocage (5 ; 7) passe au moins partiellement par-dessus la partie (41) de l'unité de transport (4) lorsque l'unité de transport (4) est bloquée par le moyen de blocage (5 ; 7).

5. Dispositif (1; 3) selon l'une des revendications 1-4, dans lequel le moyen de détection (2) est conçu pour détecter le blocage de l'unité de transport (4) par le moyen de blocage (5 ; 7) sur la base d'un contact établi entre le moyen de blocage (5 ; 7) et la partie (41) du moyen de détection (2) lorsque l'unité de transport (4) est bloquée par le moyen de blocage (5 ; 7).

6. Dispositif (1 ; 3) selon l'une des revendications 1-5, dans lequel le moyen de détection (2) est conçu pour détecter le blocage de l'unité de transport (4) par le moyen de blocage (5 ; 7) sur la base d'une force exercée par le moyen de blocage (5 ; 7) sur la partie (20 ; 8) du moyen de détection (2) agencée entre le moyen de détection (2) et la partie (41) de l'unité de transport (4), lorsque l'unité de transport (4) est bloquée par le moyen de blocage (5 ; 7).

7. Dispositif (1 ; 3) selon la revendication 6, dans lequel la force dans la partie (20 ; 8) du moyen de détection (2) entraîne une modification d'une résistance électrique, d'une capacité électrique, d'une inductance électrique, d'une tension électrique, d'un champ magnétique ou d'une pression, et le blocage de l'unité de transport (4) par le moyen de blocage (5 ; 7) étant détecté par le moyen de détection (2) sur la base de cette modification.

8. Dispositif selon l'une des revendications 1-7, dans lequel au moins la partie (20 ; 8) du moyen de détection (2) susceptible d'être agencée entre le moyen de blocage (5 ; 7) et au moins la partie (41) de l'unité de transport (4) est conçue comme une bande, un câble ou une ligne.

9. Dispositif (1; 3) selon l'une des revendications 1-8, dans lequel une extrémité de la partie (20 ; 8) du moyen de détection (2) est reliée fermement au dispositif (1 ; 3), et l'autre extrémité de la partie (20 ; 8) du moyen de détection (2) peut être reliée de façon détachable au dispositif (1; 3).

10. Dispositif (1; 3) selon l'une des revendications 1-9, dans lequel la modification du mode de fonctionnement de l'appareil électronique comprend l'une des modifications suivantes :
- arrêt et/ou mise en marche de l'appareil électronique ;
- interruption et/ou rétablissement d'une alimentation électrique de l'appareil électronique ;
- passage à et/ou sortie d'un mode de veille de l'appareil électronique,
- passage à et/ou sortie d'un mode, dans lequel l'appareil électronique n'envoie pas ou ne peut envoyer d'informations.

11. Dispositif (1; 3) selon l'une des revendications 1-10, dans lequel le dispositif (1 ; 3) est une partie de l'appareil électronique (1) ou peut être relié de façon détachable à l'appareil électronique (1').

12. Dispositif (1; 3) selon l'une des revendications 1-10, dans lequel le dispositif (1 ; 3) est une partie de l'unité de transport (4) ou peut être relié de façon détachable à l'unité de transport (4).

13. Dispositif (1 ; 3) comprenant :
- des moyens (16) pour la réception d'un signal émis par un dispositif (3) selon l'une des revendications 1-12, lequel comprend le moyen pour l'émission d'un signal pour la modification du mode de fonctionnement en fonction du résultat de la détection, et
- des moyens (10') pour la modification du mode de fonctionnement de l'appareil électronique (1') sur la base du signal reçu.

14. Procédé (200 ; 300 ; 400) comprenant :
- la détection (201; 301 ; 401) du blocage d'une unité de transport (4) à transporter par un véhicule contre un déplacement dans au moins une direction par rapport au véhicule par au moins un moyen de blocage (5 ; 7), à l'aide d'un moyen de détection (2), et
- la modification (201 ; 402 ; 404) d'un mode de fonctionnement d'un appareil électronique associé à l'unité de transport (4), en fonction d'un résultat de la détection ou de l'émission (302 ; 402 ; 404) d'un signal pour la modification du mode de fonctionnement de l'appareil électronique, en fonction d'un résultat de la détection, à l'aide d'un moyen (10 ; 30) pour la modification du mode de fonctionnement ;
**caractérisé**
**en ce que** la modification du mode de fonctionnement de l'appareil électronique comprend une désactivation et/ou une activation d'au moins un composant radio de l'appareil électronique,
**en ce qu'**au moins une partie (20) du moyen de détection (2) est conçue pour être agencée entre le moyen de blocage (5 ; 7) et au moins une partie (41) de l'unité de transport (4), par laquelle le moyen de blocage (5 ; 7) protège l'unité de transport (4) contre le déplacement dans l'au moins une direction par rapport au véhicule,
**en ce qu'**au moins la partie (20 ; 8) du moyen de détection (2) susceptible d'être agencée entre le moyen de blocage (5 ; 7) et au moins la partie (41) de l'unité de transport (4) est conçue souple, de sorte que la partie (20 ; 8) du moyen de détection (2) peut être disposée autour de l'unité de transport (4).

15. Programme informatique comprenant des instructions de programme amenant un processeur (10 ; 30) à exécuter et/ou à diriger les étapes du procédé (200 ; 300 ; 400) selon la revendication 14, lorsque le programme informatique est exécuté sur le processeur [10 ; 30].
